# EUROPÄISCHE PATENTANMELDUNG

(11) **EP 2 730 858 A2**
(43) Veröffentlichungstag der Anmeldung: **14.05.2014**
(21) Anmeldenummer: 13192512.5
(22) Anmeldetag: 12.11.2013
(51) Int. Cl.: F24J 3/08, F25B 30/06, F28F 19/00, F28D 20/00

(54) **System zur Energiegewinnung mit einer Wärmepumpe**

(30) Priorität: 13.11.2012 DE 102012022215
(71) Anmelder: CWA Cellulose Werk Angelbachtal GmbH, 74918 Angelbachtal (DE)
(72) Erfinder: Huber, Johann, 74918 Angelbachtal (DE)
(74) Vertreter: Jones Day

(57) **Zusammenfassung**

Die Erfindung betrifft ein System zur Energiegewinnung mit einer Wärmepumpe (WP), wobei thermische Energie dem Boden oder einer anderen Energiequelle (6) entnommen und der Wärmepumpe (WP) zugeführt wird. Insbesondere wird ein System bereitgestellt, das nicht nur in der Anschaffung, sondern auch im Unterhalt günstig ist. Erfindungsgemäß wird am Wärmepumpenausgang (4), oder an einem entsprechend vorgeschalteten Wärmetauscherausgang, eine Mischvorrichtung (12) bereitgestellt, mit deren Hilfe die aus der Wärmepumpe (WP) oder einem vorgeschalteten Wärmetauscher kommende Flüssigkeit über einer Mindesttemperatur gehalten werden kann. Dies ermöglicht erstmals, dass für den Betrieb einer Wärmepumpe auch Flüssigkeiten mit niedrigen Temperaturen, beispielsweise unter 5 °C verwendet werden können. In einer weiteren Ausführungsform wird ein Tank über die thermische Energie eines zweiten Tanks regeneriert oder die Tanks werden abwechselnd thermisch entladen, um diese thermische Energie der Wärmepumpe zuzuführen.

## Beschreibung

Die Erfindung betrifft ein System zur Energiegewinnung mit einer Wärmepumpe, wobei thermische Energie dem Boden oder anderweitigen Energiequellen entnommen und der Wärmepumpe zugeführt wird.

Bekannte Systeme zur Energiegewinnung mit einer Wärmepumpe haben oft mindestens eine Wärmequelle, um die Heizfunktion der Wärmepumpe gewährleisten zu können. Die verwendeten Wärmequellen sind zudem meist mit einem erheblichen Kostenaufwand verbunden, da oft verwendete Solaranlagen, tiefe Erdbohrungen oder in der Erde angeordnete Flächenkollektoren sehr teuer in der Anschaffung bzw. Installation sind. Systeme, die in der Anschaffung günstiger sind, wie beispielsweise Luftwärmepumpen, sind dagegen meist im Unterhalt, insbesondere bei niedrigen Außentemperaturen teuer, da dann mit elektrischer Energie zugeheizt werden muss, um die Funktion der Wärmepumpe gewährleisten zu können. Weiter spielt auch der Wirkungsgrad eine wichtige Rolle. Luftwärmepumpen benötigen einen Teil Strom um drei Teile Energie zu erzeugen. Im Vergleich dazu können Solewärmepumpen mit einem Teil Strom derzeit ca. 4,7 Teile Energie erzeugen.

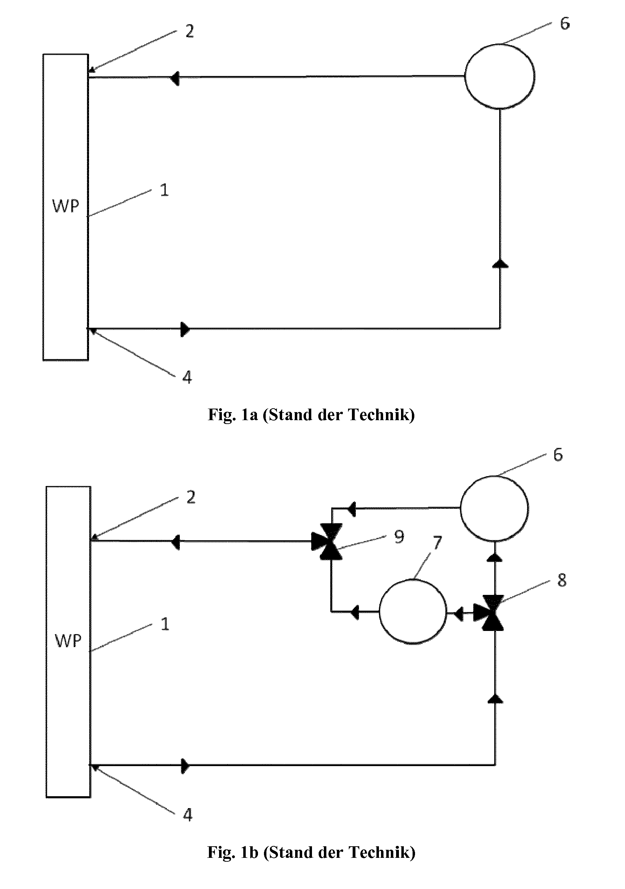

Einfache Systeme nach dem Stand der Technik, wie exemplarisch in den Figuren 1a und 1b dargestellt, führen einer Wärmepumpe 1 an einem Primärkreislaufeingang 2 eine Flüssigkeit zu, die aus einem Speicher 6 entnommen wird. Die in dem Speicher 6 befindliche Flüssigkeit wird nach dem Stand der Technik mit verschiedenen externen Wärmequellen, wie beispielsweise einer Solaranlage oder mit Abwasser, aufgewärmt. Der vom Speicher 6 zur Wärmepumpe 1 geleiteten Flüssigkeit wird in der Wärmepumpe 1 thermische Energie entzogen und die aus der Wärmepumpe 1 kommende abgekühlte Flüssigkeit oder Rücklaufflüssigkeit fließt aus einem Primärkreislaufausgang 4 zurück in den Speicher 6, um dort wieder regeneriert oder erwärmt zu werden. Fig. 1b zeigt ein weiteres System mit zwei Speichern 6, 7, wobei den Speichern 6,7 abwechselnd Flüssigkeit entnommen wird und sich der Speicher, dem keine Flüssigkeit entnommen wird, regeneriert. Die Flüssigkeit zirkuliert also entweder vom Speicher 6 oder vom Speicher 7 über ein Vorlaufsteuerventil 9 zur Wärmepumpe 1 und zurück zum entsprechenden Speicher 6 oder 7 über ein Rücklaufsteuerventil 8.

Die bekannten Systeme arbeiten mit oder ohne Wärmetauscher im Speicher. Ohne Verwendung eines Wärmetauschers zirkuliert die im Speicher befindliche Flüssigkeit direkt zur Wärmepumpe und zurück. Bei der Verwendung eines Wärmetauschers gibt die im Speicher befindliche Flüssigkeit ihre thermische Energie an ein Fluid im Wärmetauscher ab, wobei das Fluid zur Wärmepumpe und zurück zum Wärmetauscher zirkuliert.

Im Folgenden werden die Systeme mit Wärmetauscher als "geschlossene Systeme" und die Systeme ohne Wärmetauscher als "offene Systeme" bezeichnet. Diese Bezeichnung ist nicht als beschränkend zu verstehen, da auch alle erfindungsgemäßen offenen Systeme, auch wenn nicht explizit erwähnt, einen Wärmetauscher haben können, beispielsweise vor der Wärmepumpe zu deren Schutz.

Stets muss die der Wärmepumpe zugeführte Flüssigkeit eine gewisse Mindesttemperatur haben, um auszuschließen, dass die abgekühlte Flüssigkeit am Ausgang der Wärmepumpe die Frostgrenze der Flüssigkeit erreicht bzw. unterschreitet. Folge wäre ein Verschluss der Flüssigkeitsabführung, z.B. durch Eisbildung, und ein Versagen des Systems. Deshalb kann einem Speicher nur bis zu einer gewissen Mindesttemperatur Flüssigkeit entnommen und der Wärmepumpe zugeführt werden. Bekannte Systeme verwenden verschiedene externe Wärmequellen, um eine Unterschreitung einer gewissen Mindesttemperatur am Wärmepumpeneingang zu vermeiden. Ist eine gewisse Mindesttemperatur am Wärmepumpeneingang erreicht, würde dies zu einem Ausfall der Heizung durch die Wärmepumpe führen. Bei kostengünstigen Systemen wird oft mittels einer elektrischen Heizung die zur Wärmepumpe zirkulierende Flüssigkeit oder die aus der Wärmepumpe kommende Flüssigkeit elektrisch erwärmt, was sich ungünstig auf die Unterhaltskosten auswirkt.

Es ist die Aufgabe der vorliegenden Erfindung, ein einfaches und kostengünstiges System zur Energiegewinnung mit einer Wärmepumpe bereitzustellen, das nicht nur in der Anschaffung sondern auch im Unterhalt günstig ist.

Ein Grundgedanke der Erfindung liegt darin, es zu ermöglichen, dass Flüssigkeiten mit einer niedrigeren Temperatur nutzbar gemacht werden. Dies wird dadurch erreicht, dass im oder nahe am Ausgang der Wärmepumpe die eigentlich zu kalte Flüssigkeit mit einer wärmeren Flüssigkeit gemischt wird, so dass eine kritische Temperatur nicht erreicht bzw. unterschritten wird. Die wärmere Flüssigkeit kommt dabei im einfachsten Fall von der selben Quelle wie die zur Wärmepumpe geleitete Flüssigkeit, beispielsweise aus dem selben Speicher, Fluss, oder aus einem Leitungsabzweig vor dem Eingang zur Wärmepumpe. Auch kann eine andere Quelle wie ein zweiter Speicher verwendet werden, dem die wärmere Flüssigkeit entnommen wird. Dies ist auch mit mehr als zwei Speichern, beispielsweise 3, 4, 5, 6 oder mehr Speichern möglich.

Einer Wärmepumpe wird über einen Primärkreislaufeingang eine Flüssigkeit zugeführt, der thermische Energie entzogen werden soll. Die thermisch entladene Flüssigkeit wird über einen Primärkreislaufausgang aus der Wärmepumpe geleitet. Das Ausleiten kann ein Zurückführen in einen Speicher sein, oder auch ein Wegleiten, beispielsweise in das Grundwasser oder in einen Fluss. Eine Mischvorrichtung ist in Flussrichtung gesehen nach dem Primärkreislaufausgang der Wärmepumpe oder aber an diesem oder in der Wärmepumpe angeordnet. Die Mischvorrichtung trägt dafür sorge, dass die aus der Wärmepumpe kommende Flüssigkeit eine bestimmte Mindesttemperatur, vorzugsweise den Gefrierpunkt der verwendeten Flüssigkeit, nicht unterschreitet. Dadurch kann ein funktionierender Ablauf der Flüssigkeit aus der Wärmepumpe sichergestellt werden. Dazu mischt die Mischvorrichtung aus der Wärmepumpe kommende Flüssigkeit mit zur Wärmepumpe geführten und somit thermisch energiereicheren Flüssigkeit. Vorzugsweise wird nur so viel zur Wärmepumpe geführte Flüssigkeit beigemischt, dass die Mindesttemperatur gerade nicht erreicht bzw. unterschritten wird.

Durch die erfindungsgemäße Lösung kann erstmals am Eingang einer Wärmepumpe eigentlich zu kalte Flüssigkeit verwendet werden, welche ohne die erfindungsgemäße Mischvorrichtung am Ausgang der Wärmepumpe eigentlich gefrieren und somit zum Ausfall des Systems führen würde. Beispielsweise kann so Wasser auch noch unter 5 °C oder unter 4 °C oder unter 3 °C oder unter 2 °C oder unter 1 °C für die Energiegewinnung mit einer Wärmepumpe nutzbar gemacht werden.

Wird die aus der Wärmepumpe kommende Flüssigkeit in der Mischvorrichtung mit wärmerer Flüssigkeit, die zum Primärkreislaufeingang der Wärmepumpe geführt wird, gemischt, kann dies über ein Ventil gesteuert werden. Insbesondere kann durch das Ventil die genaue Menge an wärmerer Flüssigkeit gesteuert werden, vorzugsweise so, dass die Mindesttemperatur nicht erreicht bzw. unterschritten wird.

Vor der Wärmepumpe kann auch ein Wärmetauscher angeordnet werden. Dieser wird vorzugsweise in örtlicher Nähe zur Wärmepumpe angeordnet. Beim Einsatz eines Wärmetauschers wird die Energie der Flüssigkeit nicht direkt an die Wärmepumpe abgegeben, sondern über den Wärmetauscher. Der Wärmetauscher kann durch einen geschlossenen Kreislauf mit der Wärmepumpe die Energie an Letztere abgegeben. Bei der Verwendung eines Wärmetauschers kann die Mischvorrichtung statt am Ausgang der Wärmepumpe entsprechend am Ausgang des Wärmetauschers angeordnet werden. Es kann durch eine Sekundärseite des Wärmetauschers und eine Primärseite der Wärmepumpe, die den Primärkreislaufein- und ausgang der Wärmepumpe umfasst, ein geschlossener Kreislauf gebildet werden und die Mischvorrichtung so ausgebildet sein, dass sie aus der Primärseite des Wärmetauschers kommende Flüssigkeit mit zur Primärseite des Wärmetauschers geführten Flüssigkeit so mischt, dass eine resultierende Mischtemperatur eine Mindesttemperatur, vorzugsweise den Gefrierpunkt der Flüssigkeit, nicht unterschreitet. Es können auch mehrere Mischvorrichtungen verwendet werden, beispielsweise an der Wärmepumpe und am Wärmetauscher. Es können auch mehrere Wärmetauscher verwendet werden.

Bei der Verwendung eines Speichers kann dieser so im Boden angeordnet sein, dass ein Wärmeübergang vom Erdreich bzw. Boden zur im Speicher befindlichen Flüssigkeit stattfindet. Der Speicher muss also zumindest teilweise frostfrei im Boden angeordnet sein. Der Speicher, beispielsweise eine Regenwasserzisterne, und/oder eine andere Flüssigkeitsquelle wie ein Fluss oder See, ist mit der Wärmepumpe thermisch über Wärmetauscher oder so verbunden, so dass Flüssigkeit zur Wärmepumpe und optional zurück zum Speicher zirkulieren kann. Die Flüssigkeit tritt an einem Primärkreislaufeingang der Wärmepumpe ein und verlässt die Wärmepumpe abgekühlt über einen Primärkreislaufausgang. Auf der Seite des Primärkreislaufausgangs ist die Mischvorrichtung angeordnet, die aus der Wärmepumpe bzw. einem vor die Wärmepumpe geschalteten Wärmetauscher kommendes Wasser gegebenenfalls mit wärmerem Wasser mischt, so dass eine Mischtemperatur über einer kritischen Temperatur liegt. So kann insbesondere das Gefrieren der Flüssigkeit im Rücklauf, z.B. zurück zum Speicher, verhindert werden. Die wärmere Flüssigkeit, die zur bzw. vor bzw. in die Mischvorrichtung geleitet wird, kommt im einfachsten Fall auch aus der selben Quelle bzw. dem selben Speicher, aus dem Flüssigkeit zur Wärmepumpe geleitet wird. Statt einer Rückführung der Flüssigkeit in einen Speicher kann diese auch abgeleitet werden, beispielweise in das Abwasser, Grundwasser, Fluss oder See. In letzerem Fall wird ein entsprechender Zufluss an thermisch geladener Flüssigkeit benötig. So kann beispielsweise Wasser aus einem Fluss entnommen werden und in diesen nach thermischer Entladung durch die Wärmepumpe zurückgeführt werden.

In weiteren Ausgestaltungen der Erfindung kann ein zweiter Speicher verwendet werden, wobei eine Steuereinheit ab einer bestimmten Mindesttemperatur der Flüssigkeit im ersten Speicher die von der Wärmepumpe kommende Rücklaufflüssigkeit in den zweiten Speicher leitet. Diese Mindesttemperatur ist vorzugsweise so gewählt, dass die Flüssigkeit im ersten Speicher den Gefrierpunkt nicht erreicht bzw. unterschreitet. Der erste und der zweite Speicher können auf ungefähr gleicher Höhe angeordnet werden um einen Niveauausgleich zwischen dem ersten und dem zweiten Speicher bereitzustellen. So kann beispielsweise verhindert werden, dass einer der Speicher ein zu hohes Flüssigkeitsniveau erreicht. Ab einem gewissen Flüssigkeitsniveau in einem Speicher fließt über den Niveauausgleich Flüssigkeit in den jeweils anderen Speicher. Dabei kann einem Speicher die Flüssigkeit in einer gewissen Höhe bzw. Tiefe entnommen werden. Beispielsweise kann so die kältere Flüssigkeit, die im unteren Bereich des Speichers ist, in den anderen Tank geführt werden. Ein Speicher kann einen Ablauf aufweisen, um einen Überschuss an Flüssigkeit aus dem System abzuführen. Letzteres ist insbesondere bevorzugt, wenn einem Speicher Flüssigkeit zugeführt wird, beispielsweise Regen- oder Grundwasser.

Bei Systemen mit mehreren Speichern können abwechselnd Flüssigkeiten aus den Speichern entnommen werden. Beispielsweise kann eine Steuereinheit die Flüssigkeit der Speicher so entnehmen und entsprechend rückführen, dass die thermische Energie eines Speichers bis zu einem gewissen Grad entladen wird. Anschließend wird Flüssigkeit aus einem anderen Speicher entnommen, damit sich die Flüssigkeit im thermisch entladenen Speicher wieder erwärmen kann.

Die Flüssigkeit kann insbesondere bei einem offenen System normales Wasser sein. In diesem Fall kann auch weiteres, thermisch geladenes Wasser zugeführt werden, z.B. Regenwasser, Wasser aus einem Fluss oder See oder Grundwasser. Die vorgehend beschriebene Ausführung kann auch in einem geschlossenen System verwendet werden.

Ein weiteres erfindungsgemäßes System ist ein geschlossenes System zur Energiegewinnung mit einer Wärmepumpe. Das System weist mindestens zwei oder mehrere Speicher auf, die im Erdreich angeordnet sind. Mindestens ein Speicher hat mindestens einen Wärmetauscher, wobei die thermische Energie der im Speicher befindlichen Flüssigkeit an ein Fluid im Wärmetauscher abgegeben wird, das zur Wärmepumpe geleitet wird. Mittels einer Steuerung wird das Wärmetauscherfluid gezielt durch die Wärmetauscher der Speicher geleitet. In einer Ausführungsform wird einem ersten Speicher Energie für die Wärmepumpe entnommen, während der zweite Speicher insbesondere dazu verwendet wird, den ersten Speicher zu erwärmen, vorzugsweise spätestens nachdem die Speicherflüssigkeit im ersten Speicher die Kristallisationsenergie freigesetzt hat. Dazu kann die im zweiten Speicher befindliche Flüssigkeit, vorzugsweise ohne Verwendung eines Wärmetauschers, direkt in den ersten Speicher geleitet werden. D.h. Speicherflüssigkeit kann zwischen den Speichern hin und her geleitet werden.

In einer alternativen Ausführungsform haben mindestens zwei Speicher einen oder mehrere Wärmetauscher, die mit der Wärmepumpe verbunden sind. Die Steuerung kann so ausgebildet sein, dass aus dem ersten Speicher so lange thermische Energie entnommen und zur Wärmepumpe geleitet wird, bis z.B. die Flüssigkeit ihre Kristallisationsenergie freigegeben hat. Anschließend kann auf den zweiten Speicher gewechselt werden, wobei letzterer dann thermisch entladen werden kann, z.B. bis dieser die in der Flüssigkeit befindliche Kristallisationsenergie freigegeben hat. Der erste Speicher kann sich zwischenzeitlich regenerieren. Es können auch mehr als zwei Speicher verwendet werden, beispielsweise 3, 4, 5, 6 oder mehr Speicher.

Vorzugsweise liegt der Gefrierpunkt des Fluids im Wärmetauscher wesentlich unter dem Gefrierpunkt der Speicherflüssigkeit. Beispielsweise kann die im Speicher befindliche Speicherflüssigkeit Wasser und das Fluid im Wärmetauscher Sole aufweisen.

Im Folgenden werden Ausführungsbeispiele der Erfindung anhand der Zeichnungen näher erläutert. Die Zeichnungen und Erläuterungen sind als exemplarisch zu verstehen und beschränken sich auf die Merkmale, die zum Verständnis hilfreich sind. Der Einfachheit und Übersichtlichkeit halber werden keine Pumpen dargestellt. Die Ein- und Ausgänge der Mischventile sind durch die jeweiligen Strömungsrichtungspfeile gekennzeichnet.

Es zeigen:
- Fig. 1a: offenes System nach Stand der Technik mit einem Speicher;
- Fig. 1b: offenes System nach Stand der Technik mit zwei Speichern;
- Fig. 2a: offenes System gemäß der Erfindung mit einem Speicher;
- Fig. 2b: offenes System gemäß Fig. 2a mit einem Wärmetauscher;
- Fig. 3a: offenes System gemäß der Erfindung mit zwei Speichern;
- Fig. 3b: offenes System gemäß Fig. 3a mit einem Wärmetauscher;
- Fig. 4: geschlossenes System gemäß der Erfindung mit zwei Speichern, wobei beide Speicher mit der Wärmepumpe verbunden sind;
- Fig. 5: geschlossenes System gemäß der Erfindung mit zwei Speichern, wobei ein Speicher mit der Wärmepumpe verbunden ist.

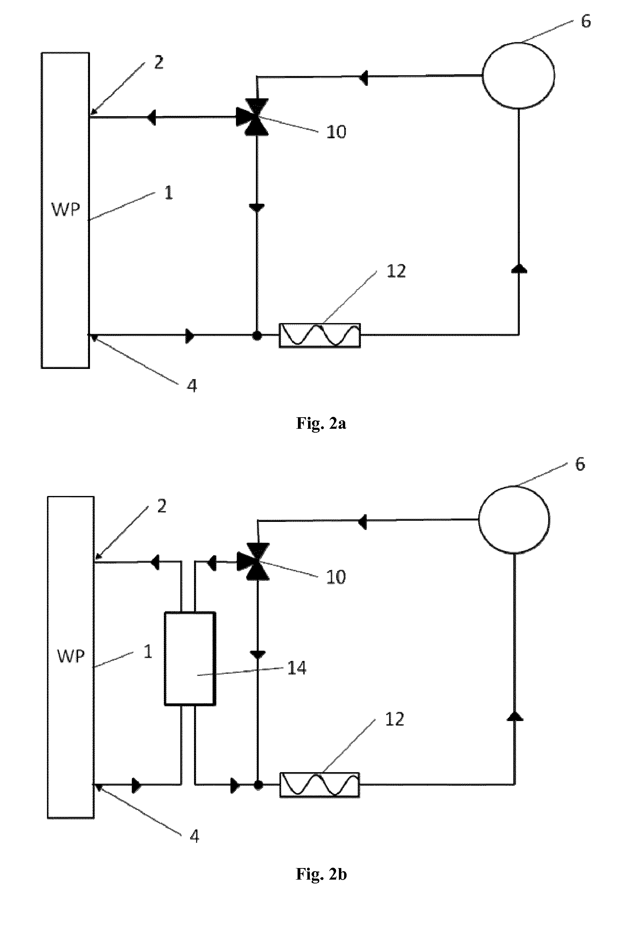

Fig. 2a zeigt ein erfindungsgemäßes offenes System. Das gleiche Prinzip ist jedoch auch für ein geschlossenes System anwendbar. Aus dem Speicher 6 wird, gesteuert durch eine Steuereinheit, die durch das umgebende Erdreich erwärmte, also thermisch geladene Flüssigkeit entnommen und über ein Mischventil 10 zur Wärmepumpe 1 geleitet. Die zur Wärmepumpe 1 fließende Flüssigkeit wird auch Vorlaufflüssigkeit genannt. Die Vorlaufflüssigkeit tritt am Primärkreislaufeingang 2 der Wärmepumpe 1 ein und verlässt diese abgekühlt am Primärkreislaufausgang 4. Die Flüssigkeit wird dann zum Speicher 6 zurückgeführt. Alternativ kann die Flüssigkeit auch aus dem System abgeführt werden. Dem Speicher 6 und/oder der Wärmepumpe 1 können auch durch andere Quellen Energie zugeführt werden, beispielsweise durch Regenwasser, Flusswasser oder Grundwasser. Der Speicher 6 kann auch ein Fluss sein, dem Wasser entnommen wird. In letzterem Fall muss der Speicher natürlich nicht so im Erdreich angeordnet sein, dass die Flüssigkeit durch das umgebende Erdreich erwärmt wird.

Ein Teil der Flüssigkeit aus dem Speicher 6 kann gegebenenfalls auch über das Mischventil 10 zur Mischvorrichtung 12 geleitet werden, wo die aus dem Speicher 6 kommende Flüssigkeit mit aus der Wärmepumpe 1 kommenden Flüssigkeit gemischt wird. Dies ist insbesondere dann der Fall, wenn die aus der Wärmepumpe 1 kommende Flüssigkeit eine bestimmte Mindesttemperatur erreicht oder unterschritten hat. Die Flüssigkeitsmenge, die direkt zur Mischvorrichtung 12 geleitet wird, wird durch das Mischventil 10 und/oder die Mischvorrichtung 12 so gesteuert, dass die resultierende Mischtemperatur eine gewisse Temperatur nicht unterschreitet, vorzugsweise die Frosttemperatur der Flüssigkeit. Statt eines Mischventils 10 mit drei Anschlüssen kann auch ein Ventil mit zwei Anschlüssen verwendet werden, beispielsweise wenn dieses in der zur Mischvorrichtung 12 führenden Abzweigleitung angeordnet wird.

Die Mischvorrichtung 12 ist in, an oder nahe der Wärmepumpe 1 angeordnet, um möglichst unmittelbar die aus der Wärmepumpe 1 kommende zu kalte Flüssigkeit wieder auf eine gewisse Mindesttemperatur zu bringen. Bei einem zu großen Abstand zur Wärmepumpe 1 könnte die aus der Wärmepumpe 1 kommende Flüssigkeit sonst eine gewisse Mindesttemperatur erreichen bzw. unterschreiten. Ist die Mindesttemperatur die Frosttemperatur, könnte die Flüssigkeit gefrieren und der Kreislauf, welcher der Wärmepumpe 1 thermisch geladene Flüssigkeit zuleitet, wäre unterbrochen bzw. könnte die Wärmepumpe nicht mehr mit Flüssigkeit durchströmt werden, da der Abfluss blockiert ist.

In einer bevorzugten Ausführungsform ist die Mischvorrichtung 12 ein Mischrohr, insbesondere ein statisches Mischrohr. Die der Mischvorrichtung 12 zugeführte wärmere Flüssigkeit kann vor bzw. an deren Eingang bzw. in die Mischvorrichtung geleitet werden. Es kann jede dem Fachmann bekannte Möglichkeit verwendet werden, die Flüssigkeiten zu mischen.

Die aus der Mischvorrichtung 12 kommende Flüssigkeit wird dann zurück in den Speicher 6 geführt, um sich dort wieder zu regenerieren oder erwärmen. Alternativ kann die Flüssigkeit auch abgeleitet werden, insbesondere wenn eine entsprechende Zufuhr an thermisch geladener Flüssigkeit sichergestellt ist, z.B. durch einen Fluss. Dann kann auch auf einen Speicher 6 verzichtet werden bzw. ist der Speicher 6, wie dargestellt, dann als die andere Quelle, z.B. ein Fluss, zu verstehen. Aber selbst im Fall der Verwendung von Flusswasser kann ein Speicher 6 von Vorteil sein, beispielsweise zur Abtrennung von Treibgut. Der Speicher 6 ist vorzugsweise so im Erdreich angeordnet, dass die in ihm befindliche Flüssigkeit thermische Energie aus dem den Speicher umgebenden Erdreich entziehen kann. Es ist daher vorteilhaft, wenn der Speicher einen möglichst geringen thermischen Widerstand hat, um möglichst schnell thermische Energie aus dem den Speicher umgebenden Erdreich zu entnehmen. Der Speicher 6 kann beispielsweise eine übliche Betonzisterne sein.

Figur 2b zeigt einen Aufbau wie Figur 2a jedoch mit einem Wärmetauscher 14, der vor der Wärmepumpe 1 angeordnet ist. Die thermisch geladene Flüssigkeit wird an der Primärseite des Wärmetauschers 14 eingeleitet und verlässt den Wärmetauscher 14 am Ausgang der Primärseite. Die Wärmepumpe 1 wird also mit thermischer Energie über den Wärmetauscher 14 versorgt. So kann beispielsweise die Wärmepumpe 1 vor Schäden geschützt werden. Auch können andere Flüssigkeiten, beispielsweise mit einem niedrigeren Gefrierpunkt im Kreislauf zwischen Wärmepumpe 1 und Wärmetauscher 14 verwendet werden als auf der Primärseite des Wärmetauschers 14. Die Mischvorrichtung 12 wird bei der Verwendung eines Wärmetauschers 14 vorzugsweise statt an der Wärmepumpe 1 entsprechend am primärseitigen Ausgang des Wärmetauschers 14 angeordnet. Auch können mehrere Mischvorrichtungen 12 verwendet werden, beispielsweise sowohl an der Wärmepumpe 1 also auch am Wärmetauscher 14. Die Mischvorrichtung 12 kann aus dem primärseitigen Ausgang des Wärmetauschers 14 kommende Flüssigkeit mit zum primärseitigen Eingang des Wärmetauschers 14 geführter Flüssigkeit mischen, so dass eine Mindesttemperatur nicht erreicht bzw. unterschritten wird.

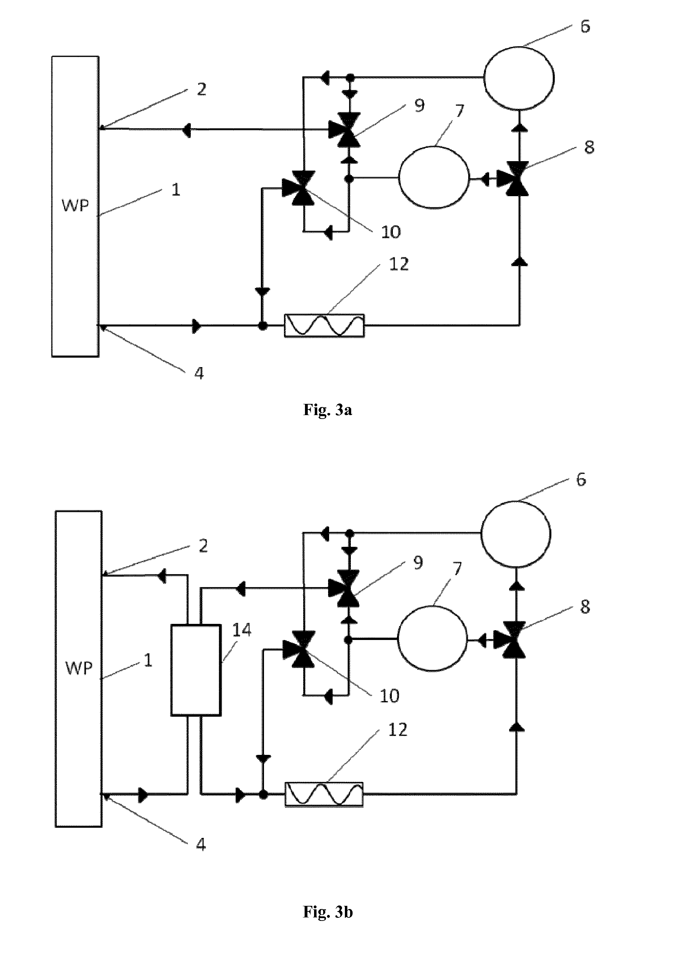

Figur 3a zeigt ein offenes System gemäß der Erfindung mit zwei Tanks. Auch dieses Prinzip ist ohne weiteres auf ein geschlossenes System anwendbar.

Neben dem ersten Speicher 6 wird ein zweiter Speicher 7 bereitgestellt. Flüssigkeit kann, gesteuert durch eine Steuereinheit, aus einem der Speicher 6 oder 7 entnommen und über ein Vorlaufsteuerventil 9 zur Wärmepumpe 1 geleitet werden. Die aus dem Primärkreislaufausgang 4 kommende Flüssigkeit wird über ein Rücklaufsteuerventil 8 in einen der Speicher 6, 7 geleitet. Weiter kann Flüssigkeit aus den Speichern auch direkt an die in, an oder nahe des Primärkreislaufausgangs 4 angeordnete Mischvorrichtung 12 geleitet werden, um gegebenenfalls die aus der Wärmepumpe 1 kommende Flüssigkeit zu erwärmen.

Alternativ kann aus den Speichern 6 und 7 gleichzeitig Flüssigkeit entnommen werden und zu beiden oder nur einem zurückgeführt werden.

Die Verbindungen können auch so gestaltet bzw. gesteuert sein, dass der erste Speicher 6 lediglich Flüssigkeit zur Wärmepumpe 1 leitet und der zweite Speicher 7 lediglich Flüssigkeit zur Mischvorrichtung 12 leitet.

In einer Ausführungsform wird so lange aus dem ersten Speicher 6 Flüssigkeit zur Wärmepumpe 1 und zurück zum ersten Speicher 6 geleitet, bis die Flüssigkeit im Speicher 6 eine gewisse Mindesttemperatur erreicht hat. Dann wird Flüssigkeit aus dem zweiten Speicher 7 zur Wärmepumpe und zurück zum Speicher 7 geführt, während sich die Flüssigkeit im ersten Speicher 6 wieder regeneriert, d.h. thermische Energie aus dem umgebenden Erdreich aufnimmt.

Alternativ wird so lange aus dem ersten Speicher 6 Flüssigkeit zur Wärmepumpe 1 und zurück zum ersten Speicher 6 geleitet, bis die Flüssigkeit im Speicher 6 eine gewisse Mindesttemperatur erreicht hat. Dann wird die aus der Wärmepumpe 1 kommende kalte Flüssigkeit nicht mehr zurück in den ersten Speicher 6 sondern in den zweiten Speicher 7 geleitet. So wird die im Speicher 6 befindliche Flüssigkeit nicht weiter abgekühlt.

Sollte die aus der Wärmepumpe 1 kommende Flüssigkeit zu kalt sein, wird vom jeweils wärmeren Speicher 6, 7 Flüssigkeit direkt in die Mischvorrichtung geleitet, wobei die Menge der Flüssigkeit so gewählt wird, dass die Mischtemperatur an oder über der kritischen Temperatur liegt.

Ein in den Figuren nicht dargestellter optionaler Niveauausgleich kann zwischen den Speichern 6, 7 angeordnet sein. Die Speicher sind dann vorzugsweise auf einer im wesentlichen gleichen Höhe zueinander angeordnet. Der Niveauausgleich kann sicherstellen, dass wenn ein Speicher einen hohen Flüssigkeitsstand hat, Flüssigkeit in den anderen Speicher geleitet wird. Insbesondere kann aus einem Speicher die Flüssigkeit in einer gewissen Höhe bzw. Tiefe entnommen werden, so dass Flüssigkeit einer gewissen Temperatur in den anderen Speicher geleitet wird. Beispielsweise kann so die kältere Flüssigkeit, die im unteren Bereich des Speichers ist, in den anderen Speicher geführt werden. Zum Beispiel kann aus dem Speicher 6, der gerade Flüssigkeit zur Wärmepumpe 1 leitet, kaltes Wasser entnommen und in den Speicher 7 geleitet werden. Im Speicher 7 kann die Flüssigkeit in obere Flüssigkeitsschichten geleitet werden, um eine bessere Temperaturdurchmischung zu erreichen.

Weiter kann einer der Speicher 6, 7 einen Ablauf haben, um einen Überschuss an Flüssigkeit aus dem System zu leiten. Dies ist insbesondere dann vorteilhaft, wenn Flüssigkeit von Extern zugeführt wird. Beispielsweise kann bei der Verwendung von Wasser als Flüssigkeit auch Regenwasser oder Grundwasser in die Speicher zugeführt werden. Das erfindungsgemäße System, d.h. auch alle beschriebenen Ausführungsformen, können jedoch ganz ohne weitere Energiequellen auskommen und lediglich mit der thermischen Energie aus der Umgebung der Speicher arbeiten.

Figur 3b zeigt einen Aufbau wie Figur 3a jedoch zusätzlich mit einem Wärmetauscher 14, der vor der Wärmepumpe 1 angeordnet ist. Bezüglich der detaillierten Beschreibung der Funktion wird auf die Beschreibung des Wärmetauschers 14 im Zusammenhang mit Figur 2b verwiesen, die hier analog zutrifft.

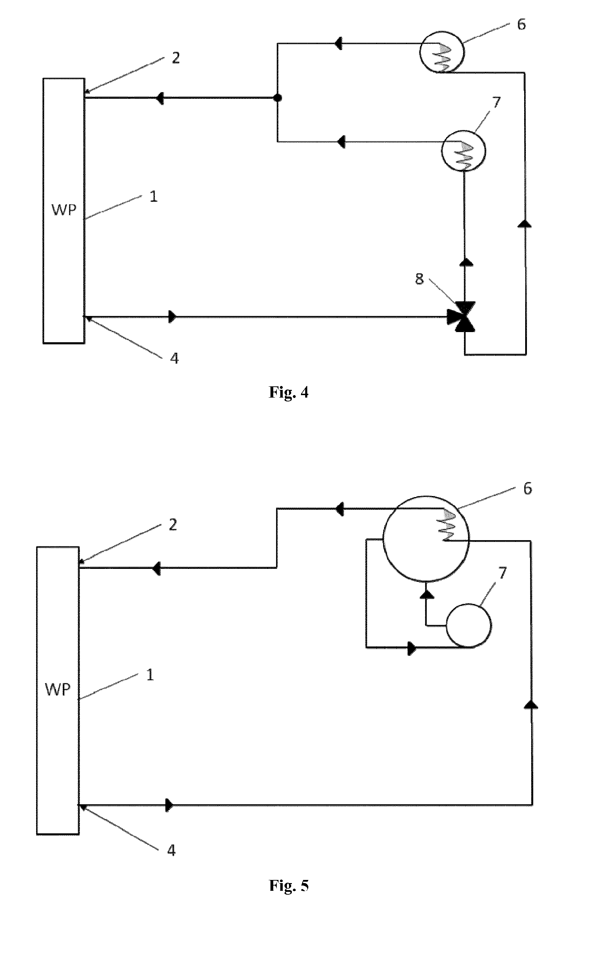

Fig. 4 zeigt eine Ausführungsform eines geschossenen Systems. Die Speicher 6, 7 weisen Wärmetauscher auf. Die in den Speichern 6, 7 befindliche Speicherflüssigkeit, z.B. Wasser, gibt thermische Energie über die Wärmetauscher an ein Fluid, das zwischen den Wärmetauschern und der Wärmepumpe 1 zirkuliert. In Fig. 4 ist lediglich im Rücklauf von der Wärmepumpe 1 zu den Speichern 6, 7 ein Rücklaufsteuerventil 8 gezeigt. Es kann jedoch zusätzlich oder auch ausschließlich ein Vorlaufsteuerventil, wie in Verbindung mit Fig. 3 erläutert, verwendet werden.

Vorzugsweise hat die Wärmetauscherflüssigkeit einen Gefrierpunkt, der wesentlich unter dem Gefrierpunkt der in den Speichern befindlichen Flüssigkeit liegt. Beispielsweise wird als Speicherflüssigkeit Wasser und als Wärmetauscherflüssigkeit Sole verwendet.

Im Betrieb kann beispielsweise einem ersten Speicher 6 thermische Energie entzogen werden, bis die darin befindliche Flüssigkeit soweit abgekühlt ist, dass sie ihre Kristallisationsenergie abgibt. Diese Energie wird der Wärmepumpe 1 über die Wärmetauscherflüssigkeit am Primärkreislaufeingang 2 zugeführt.

Nachdem die im ersten Speicher 6 befindliche Flüssigkeit ihre Kristallisationsenergie abgegeben hat oder bereits früher, kann auf den Speicher 7 gewechselt werden. Während dem Speicher 7 thermische Energie entnommen und zur Wärmepumpe 1 geführt wird, kann sich der Speicher 6 regenerieren, d.h. die im Speicher 6 befindliche Speicherflüssigkeit wird über die Wärme des den Speicher umgebenden Erdreichs erwärmt.

Wie in Figur 5 gezeigt, kann alternativ ein Speicher dazu verwendet werden, den anderen zu regenerieren. In dem in Figur 5 gezeigten Beispiel ist der Speicher 7 mit dem Speicher 6 verbunden, wobei Speicherflüssigkeit aus dem Speicher 7 in den Speicher 6 geleitet werden kann und umgekehrt. So kann thermische Energie vom Speicher 7 zum Speicher 6 transportiert werden. Der Kreislauf zwischen Speicher 6 und der Wärmepumpe kann so kontinuierlich fortgesetzt werden, d.h. es muss nicht zwischen zwei oder mehreren Speichern gewechselt werden. Vorzugsweise wird der Kreislauf zwischen den Speichern 6 und 7 abhängig von der Temperatur der Speicherflüssigkeit im Speicher 6 und/oder im Speicher 7 gesteuert. Beispielsweise wird der Speicher 6 nachdem oder bevor die Kristallisationsenergie seiner Speicherflüssigkeit freigegeben wurde, durch die thermische Energie des Speicher 7 regeneriert. Auch kann die Temperatur der Speicherflüssigkeit im Speicher 6 in einem gewissen Bereich gehalten werden, wobei ab einer gewissen Temperaturuntergrenze thermische Energie vom Speicher 7 in den Speicher 6 geleitet wird und dieser Vorgang optional bei einer gewissen Obergrenze gestoppt wird, wodurch sich die im Speicher 7 befindliche Speicherflüssigkeit regenerieren kann.

Somit wird im Betrieb vorzugsweise keine externe Wärmequelle neben der vom Erdreich gelieferten thermischen Energie benötigt, insbesondere nicht zum regenerieren eines thermisch entladenen Speichers, z.B. zum Auftauen der Speicherflüssigkeit.

Auch in den in Figur 4 und 5 gezeigten Ausführungsbeispielen kann vor der Wärmepumpe 1, vorzugsweise in örtlicher Nähe zur Wärmepumpe 1, ein Wärmetauscher 14, wie in Verbindung mit Figuren 2b und 3b dargelegt, verwendet werden.

Wie bereits erläutert, sind die vorgehend näher beschriebenen Beispiele als exemplarisch zu verstehen und sollen keine Einschränkung des Schutzumfangs darstellen, der lediglich durch die folgenden Patentansprüche definiert ist.

## Patentansprüche

1. System zur Energiegewinnung mit einer Wärmepumpe, umfassend:
eine Wärmepumpe mit einem Primärkreislaufeingang zum Zuführen einer Flüssigkeit in die Wärmepumpe und einem Primärkreislaufausgang zum Abführen der Flüssigkeit aus der Wärmepumpe; und
mindestens eine Mischvorrichtung, die nach, an oder in der Wärmepumpe am Primärkreislaufausgang angeordnet ist, wobei die Mischvorrichtung so ausgebildet ist, dass sie aus der Wärmepumpe kommende Flüssigkeit mit zur Wärmepumpe geführten Flüssigkeit so mischt, dass eine resultierende Mischtemperatur eine Mindesttemperatur, vorzugsweise den Gefrierpunkt der Flüssigkeit, nicht unterschreitet, um ein Abführen der Flüssigkeit aus der Wärmepumpe sicher zu stellen.

2. System nach Anspruch 1, weiter mit einem Ventil zum Steuern der Menge an zum Primärkreislaufeingang der Wärmepumpe geführten Flüssigkeit, die zur Mischvorrichtung geleitet wird.

3. System nach Anspruch 1 oder 2, weiter mit einem Wärmetauscher vor der Wärmepumpe, vorzugsweise in örtlicher Nähe zur Wärmepumpe, wobei die thermische Energie der Flüssigkeit über den Wärmetauscher an die Wärmepumpe geleitet wird und die Mischvorrichtung nach, an oder in einem primärseitigen Wärmetauscherausgang angeordnet ist.

4. System nach Anspruch 3, wobei durch eine Sekundärseite des Wärmetauschers und eine Primärseite der Wärmepumpe ein geschlossener Kreislauf gebildet wird und die Mischvorrichtung so ausgebildet ist, dass sie aus der Primärseite des Wärmetauschers kommende Flüssigkeit mit zur Primärseite des Wärmetauschers geführten Flüssigkeit so mischt, dass eine resultierende Mischtemperatur eine Mindesttemperatur, vorzugsweise den Gefrierpunkt der Flüssigkeit, nicht unterschreitet.

5. System nach einem der vorhergehenden Ansprüche, weiter mit mindestens einem Speicher, der die Flüssigkeit zum Wärmetransport aufweist und zumindest soweit frostfrei im Boden angeordnet ist, dass ein Wärmeübergang vom Boden zur Flüssigkeit stattfindet, vorzugsweise wobei die von der Wärmepumpe oder dem Wärmetauscher kommende Flüssigkeit wieder zurück in den mindestens einen Speicher geführt wird.

6. System nach Anspruch 5 mit einem zweiten Speicher und einer Steuereinheit, wobei die Steuereinheit so ausgebildet ist, dass ab einer bestimmten Mindesttemperatur der Flüssigkeit im ersten Speicher die Flüssigkeit vom Primärkreislaufausgang der Wärmepumpe oder vom Wärmetauscher in den zweiten Speicher geleitet wird, wobei vorzugsweise die Mindesttemperatur so gewählt ist, dass die Flüssigkeit im ersten Speicher den Gefrierpunkt nicht erreicht.

7. System nach Anspruch 6, wobei der erste und der zweite Speicher auf ungefähr gleicher Höhe angeordnet sind, weiter umfassend einen Niveauausgleich zwischen dem ersten und dem zweiten Speicher, wobei der Niveauausgleich so ausgebildet ist, dass ab einem gewissen Flüssigkeitsniveau in einem Speicher Flüssigkeit in den jeweils anderen Speicher fließt, wobei vorzugsweise weiter unten im Speicher befindliche kältere Flüssigkeit entnommen wird.

8. System nach Anspruch 5 mit einem zweiten Speicher und einer Steuereinheit, wobei die Steuereinheit so ausgebildet ist, dass die Flüssigkeit abwechselnd aus dem ersten und dem zweiten Speicher zur Wärmepumpe oder zum Wärmetauscher und zurück zum jeweiligen Speicher geführt wird und sich die Flüssigkeit in dem Speicher, aus dem keine Flüssigkeit zur Wärmepumpe oder zum Wärmetauscher und zurück geführt wird, erwärmt.

9. System nach einem der vorhergehenden Ansprüche, wobei die Flüssigkeit Wasser, Flusswasser, Regenwasser und/oder Grundwasser aufweist.

10. System nach einem der vorhergehenden Ansprüche, wobei die Mischvorrichtung ein statisches Mischrohr ist.

11. System zur Energiegewinnung mit einer Wärmepumpe, umfassend:
mindestens zwei Speicher, die eine Speicherflüssigkeit zum Wärmetransport aufweisen und zumindest soweit frostfrei im Boden angeordnet sind, dass ein Wärmeübergang vom Boden zur Speicherflüssigkeit stattfindet;
mindestens einen Wärmetauscher in mindestens einem Speicher, wobei der Wärmetauscher ein Wärmetauscherfluid aufweist,
eine Wärmepumpe, die mit dem mindestens einen Wärmetauscher so verbunden ist, dass das Wärmetauscherfluid von einem oder mehreren Wärmetauschern über einen Primärkreislaufeingang in die Wärmepumpe geführt wird und von einem Primärkreislaufausgang aus der Wärmepumpe zurück in einen oder mehrere Wärmetauscher geführt wird; und
mindestens eine Wärmetauscherfluidsteuerung zur Steuerung des Wärmetauscherfluids durch den mindestens einen Wärmetauscher in den jeweiligen Speichern.

12. System nach Anspruch 11, wobei der Gefrierpunkt des Wärmetauscherfluids unter dem Gefrierpunkt der Speicherflüssigkeit liegt.

13. System nach Anspruch 11 oder 12, weiter mit einer Wärmetauscherfluidsteuerung und mindestens einem Wärmetauscher pro Speicher, wobei die Wärmetauscherfluidsteuerung so ausgebildet ist, dass thermische Energie abwechselnd aus den zwei Speichern zur Wärmepumpe geführt wird während sich der Speicher, dem keine thermische Energie entnommen wird, regeneriert, wobei vorzugsweise den Speichern so lange thermische Energie entnommen wird, bis die Kristallisationsenergie der Speicherflüssigkeit abgegeben wurde.

14. System nach Anspruch 11 oder 12, wobei ein Wärmetauscher in einem ersten Speicher mit der Wärmepumpe verbunden ist und ein zweiter Speicher mit dem ersten Speicher so verbunden ist, dass Speicherflüssigkeit zwischen den Speichern hin und her geleitet werden kann, wobei eine Speicherflüssigkeitssteuerung so ausgebildet ist, dass mit der thermischen Energie des zweiten Speichers der erste Speicher durch Einleiten von Speicherflüssigkeit aus dem zweiten Speicher erwärmt wird, vorzugsweise spätestens nachdem die Speicherflüssigkeit im ersten Speicher ihre Kristallisationsenergie freigesetzt hat.

15. System nach einem der Ansprüche 11 bis 14, wobei die Speicherflüssigkeit Wasser und das Wärmetauscherfluid Sole aufweist.
